# FASCICULE DE BREVET EUROPEEN

(11) **EP 4 376 641 B1**
(45) Date de publication et mention de la délivrance du brevet: **17.09.2025**
(21) Numéro de dépôt: 22750842.1
(22) Date de dépôt: 26.07.2022
(51) Int. Cl.: A23P 30/20, B29C 48/30

(54) **SYSTÈME DE PRÉPARATION EN CONTINU D'UN PRODUIT ALIMENTAIRE EXTRUDÉ À PARTIR D'UNE MATIÈRE RICHE EN PROTÉINES ET EN EAU**
KONTINUIERLICHES HERSTELLSYSTEM FÜR EXTRUDIERTE LEBENSMITTEL AUS EIWEISS- UND WASSERREICHEN MASSEN
CONTINUOUS PRODUCTION SYSTEM FOR EXTRUDED FOOD PRODUCTS MADE FROM MATTER RICH IN PROTEINS AND WATER

(30) Priorité: 27.07.2021 FR 2108134
(43) Date de publication de la demande: 05.06.2024
(73) Titulaire: Clextral, 42700 Firminy (FR)
(72) Inventeur: DANOS, Lionel, 42740 St Paul en Jarez (FR); ASENSIO, Luis, 42600 Savigneux (FR); MOTTAZ, Jérôme, 43200 Saint-Maurice de Lignon (FR)
(74) Mandataire: Lavoix
(86) Numéro de dépôt international: PCT/EP2022/070887
(87) Numéro de publication internationale: WO 2023/006713

(56) Documents cités:
- WO-A1-2010/117380
- WO-A1-2021/136816
- CH-A- 353 526
- US-A1- 2003 091 710

## Description

La présente invention concerne un système de production en continu d'un produit alimentaire extrudé, comprenant une filière pour l'extrusion d'une matière riche en protéines et en eau.

L'invention s'intéresse aux machines d'extrusion comportant un fourreau à l'intérieur duquel une ou plusieurs vis, notamment deux vis, sont entraînées en rotation sur elles-mêmes de sorte qu'elles entraînent une matière à extruder depuis une partie amont du fourreau jusqu'à l'extrémité aval du fourreau où la matière est alors forcée de s'écouler à travers une filière d'extrusion, prévue pour mettre en forme, texturer et/ou fibrer la matière extrudée. Une telle machine d'extrusion applique un traitement thermomécanique à la matière, dans le sens où cette matière subit à la fois une transformation essentiellement mécanique, par mise en pression et par cisaillement par les vis, et une transformation essentiellement thermique, par régulation de la température le long du fourreau.

L'invention concerne plus spécifiquement l'extrusion de matières riches en protéines et en eau, ainsi que les systèmes associés qui permettent de préparer en continu un produit alimentaire extrudé à partir d'une matière première riche en protéines et en eau. Les protéines de la matière première peuvent être d'origine animale et/ou d'origine végétale et/ou d'une autre origine. Dans tous les cas, les protéines sont mélangées avec une proportion importante d'eau, ainsi que, éventuellement, des matières grasses et des additifs, et le mélange correspondant est soumis au traitement thermomécanique qu'applique la machine d'extrusion afin d'être chauffé puis gélifié avant d'être mis en forme dans la filière. La texturation, autrement appelée fibration, du produit alimentaire se produit essentiellement dans la filière de la machine d'extrusion, que la matière sortant du fourreau de cette machine traverse en étant poussée par les vis de la machine. Ce procédé de préparation de produits alimentaires à base de protéines fibrées est connu sous le nom de « CEMH » qui est l'acronyme de l'expression « Cuisson-Extrusion en Milieu Humide », ainsi que sous le nom de « HME » qui est l'acronyme de l'expression anglaise « High Moisture Extrusion ».

WO 03/007729 divulgue un procédé CEMH et une machine d'extrusion associée, dans lesquels la filière est prévue pour refroidir de manière régulée la matière la traversant, en faisant s'écouler cette matière dans un canal qui présente à la fois une grande longueur, typiquement de plusieurs mètres, et une section rectangulaire, un profil de température étant appliqué le long de ce canal de manière à diminuer la température de la matière progressivement entre l'entrée et la sortie du canal. La matière en contact avec la paroi refroidie du canal tend à adhérer à cette paroi, ce qui permet de cisailler l'écoulement laminaire de matière dans le canal. Ce cisaillement contribue à développer des lignes de courant au sein de la pâte de matière et tend à aligner des macromolécules dénaturées dans la direction de l'écoulement. En pratique, le taux de cisaillement et le régime d'écoulement résultent de la géométrie fixe du canal, de sorte que la maîtrise de la fibration nécessite que le canal et, par-là, le temps de traitement dans la filière soient longs.

US 2003/091710 divulgue une filière pour l'extrusion d'une matière à base d'amidon. Cette filière comporte une enveloppe externe tubulaire, dont une partie aval délimite une face intérieure tronconique et dont une partie amont cylindrique est directement solidarisée coaxialement à la sortie du fourreau d'une extrudeuse. La filière comporte également un organe interne agencé coaxialement à l'intérieur de la partie aval de l'enveloppe externe. Sur son côté aval, l'organe interne est accouplé à un moteur afin d'entraîner l'organe interne en rotation sur lui-même autour d'un axe central de la filière. De plus, l'organe interne délimite une face extérieure conique de manière à former, entre cette dernière et la face intérieure tronconique de l'enveloppe externe, un canal dans lequel la matière à base d'amidon progresse jusqu'à une extrémité aval où la matière sort à l'extérieur de l'enveloppe externe.

WO 2021/136816 A1 divulgue un autre système de préparation en continu d'un produit alimentaire extrudé.

Le but de la présente invention est de proposer un système de préparation en continu d'un produit alimentaire extrudé à partir d'une matière riche en protéines et en eau, qui soit moins encombrant, ainsi que plus performant et adaptable vis-à-vis de la fibration du produit.

À cet effet, l'invention a pour objet un système de préparation en continu d'un produit alimentaire extrudé, tel que défini à la revendication 1.

Une des idées à la base de l'invention est de concevoir une filière d'extrusion qui, tout en assurant un bon échange thermique avec la matière la traversant, permet d'ajuster le taux de cisaillement appliqué à l'écoulement de cette matière dans la filière, en rendant alors possible d'utiliser ce taux de cisaillement réglable comme paramètre de pilotage de la filière. Pour ce faire, la filière définit un canal dans lequel la matière traversant la filière s'écoule, ce canal étant délimité par l'agencement coaxial d'une surface extérieure tronconique d'un organe interne de la filière dans une surface intérieure tronconique d'une enveloppe externe de la filière, ces deux surfaces tronconiques étant divergentes vers l'aval. La distance séparant les deux faces tronconiques précitées définit l'épaisseur du canal et est modifiable en jouant sur le positionnement axial relatif de l'organe interne et de l'enveloppe externe, le cas échéant au moyen d'un dispositif de réglage ad hoc. En pratique, l'invention recouvre de multiples possibilités quant aux angulations respectives de la face extérieure tronconique de l'organe interne et de la face intérieure tronconique de l'enveloppe externe : en particulier, il peut être prévu (i) que ces angulations respectives sont égales l'une à l'autre ou bien différentes l'une de l'autre le long du canal et/ou (ii) que l'une et/ou l'autre de ces angulations soient constantes le long du canal ou bien varient le long du canal, ce qui, dans ce dernier cas, revient à dire que la ou chaque face tronconique concernée n'est pas constituée d'un unique tronc de cône mais d'une juxtaposition axiale d'au moins deux troncs de cône coaxiaux dont les angles au sommet sont différents l'un de l'autre. Par ailleurs, l'enveloppe externe et/ou l'organe interne sont thermorégulés de sorte que la face intérieure tronconique de l'enveloppe externe et/ou la face extérieure tronconique de l'organe interne, contre lesquelles s'écoule la matière dans le canal, peuvent avoir une température différente, plus basse par exemple, comparativement à la température de la matière, ce qui fait que la matière tend à plus ou moins adhérer à cette face intérieure tronconique de l'enveloppe externe et/ou à cette face extérieure tronconique de l'organe interne. Le transfert thermique entre, d'une part, l'enveloppe externe et/ou l'organe interne et, d'autre part, la matière s'écoulant dans le canal est substantiel, du fait des interfaces de contact tronconiques étendues. Dans le même temps, l'organe interne est monté rotatif autour de l'axe central de la filière, en étant entraînable depuis une partie aval de l'organe interne, de sorte que, en entraînant en rotation l'organe interne par rapport à l'enveloppe externe, la matière s'écoulant dans le canal tend à s'enrouler autour de la face extérieure tronconique de l'organe interne. La matière s'écoulant dans le canal se retrouve ainsi fortement cisaillée entre la face intérieure tronconique de l'enveloppe externe et la face extérieure tronconique de l'organe interne, et ce avec un taux de cisaillement qui est réglable par changement de la vitesse de rotation de l'organe interne et/ou par changement du sens de rotation de l'organe interne et/ou par ajustement de la thermorégulation de l'enveloppe externe et/ou par ajustement de la thermorégulation de l'organe interne et/ou par modification de la position axiale de l'organe interne par rapport à l'enveloppe externe. La filière permet ainsi d'obtenir et de commander finement la fibration de la matière s'écoulant dans le canal et donc la fibration du produit alimentaire extrudé qui est préparé en continu par le système conforme à l'invention, tout en notant que la filière est compacte, c'est-à-dire peu encombrante suivant la direction de son axe central.

Des caractéristiques additionnelles avantageuses du système conforme à l'invention sont spécifiées aux autres revendications.

L'invention sera mieux comprise à la lecture de la description qui va suivre, donnée uniquement à titre d'exemple et faite en se référant aux dessins sur lesquels :
- [Fig 1] la figure 1 est une vue en perspective d'un système conforme à l'invention ;
- [Fig 2] la figure 2 est une vue similaire à la figure 1, illustrant une partie du système de la figure 1, incluant une filière ;
- [Fig 3] la figure 3 est une vue similaire à la figure 2, illustrant la filière sous un angle d'observation différent de celui de la figure 2 et dans un état fonctionnel différent de celui de la figure 2 ;
- [Fig 4] la figue 4 est une coupe longitudinale schématique partielle dans le plan IV de la figure 1 ;
- [Fig 5] la figure 5 est une coupe selon la ligne V-V de la figure 4 ; et
- [Fig 6] la figure 6 est une coupe selon la ligne VI-VI de la figure 4.

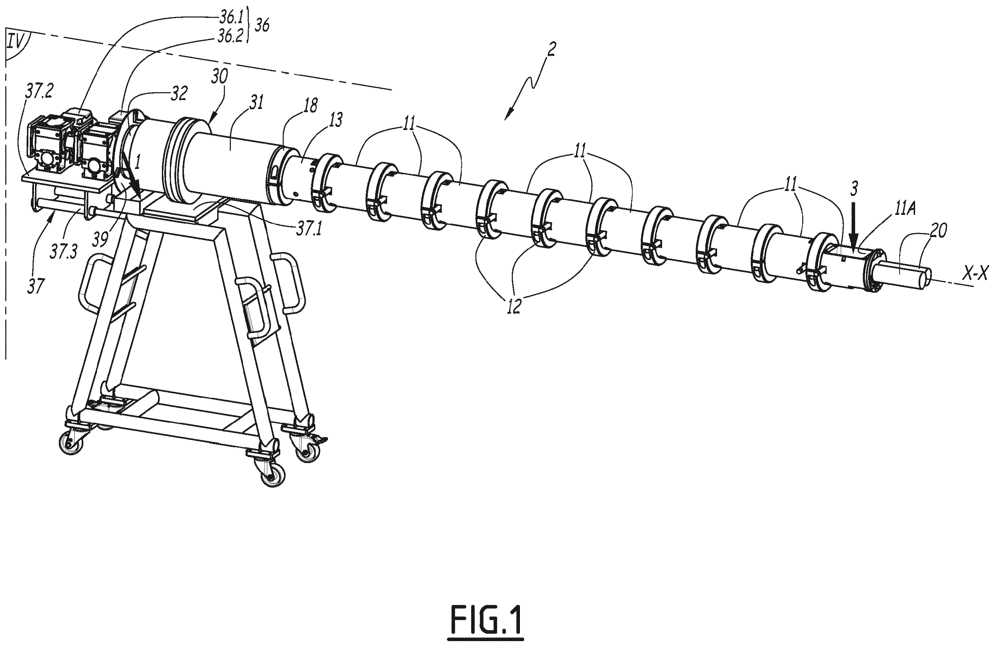

Sur les figures 1 à 6 est représentée de manière schématique un système permettant de préparer en continu, par extrusion, un produit alimentaire 1 destiné à l'alimentation humaine et/ou animale. Ce système comporte principalement une machine d'extrusion 2, détaillée un peu plus bas, et une matière première 3.

La matière première 3 est riche en protéines et en eau. Plus précisément, la matière première 3, c'est-à-dire l'ensemble des ingrédients qui sont traités par la machine d'extrusion 2 pour former le produit alimentaire 1, contient majoritairement, autrement dit à plus de 50% en poids, de l'eau et des protéines, ainsi que, minoritairement voire marginalement, des fibres alimentaires et/ou de l'amidon, ainsi qu'éventuellement des matières grasses et des additifs.

Le produit alimentaire 1, tel qu'il est obtenu en sortie de la machine d'extrusion 2, est texturé, autrement dit fibré. Le produit alimentaire 1 comprend entre 25 et 90% en poids, de préférence entre 50 et 85% en poids, d'eau et comprend également, en poids sur la totalité de la matière sèche, entre 20 et 90% de protéines.

Les protéines de la matière première 3 et donc du produit alimentaire 1 sont d'origine végétale et/ou d'origine animale et/ou d'au moins une autre origine. Les protéines d'origine végétale proviennent par exemple des légumineuses, des céréales et/ou des protéagineux (soja, blé, pois, maïs, pois chiches, lentilles, etc.). Les protéines d'origine animale sont par exemple issues du poisson, de la viande, du lait et/ou des œufs. La ou les autres origines de protéines sont par exemple les champignons, les algues, les insectes, la viande cellulaire, etc.

Le produit alimentaire 1 comprend également, en poids sur la totalité de la matière sèche, entre 0 et 50% de fibres alimentaires et entre 0 et 50% d'amidon, la somme des fibres alimentaires et/ou d'amidon étant préférentiellement supérieure à 0,01%. Les fibres alimentaires sont par exemple des fibres d'origine végétale et l'amidon est par exemple d'origine végétale, à l'état natif, prégélatinisé ou modifié.

Le produit alimentaire 1 peut aussi comprendre, en poids sur la totalité de la matière sèche, entre 0 et 20% de matières grasses, notamment d'origine végétale et/ou animale, et/ou des ingrédients fonctionnels, comme les lécithines, les caséinates ou d'autres ingrédients.

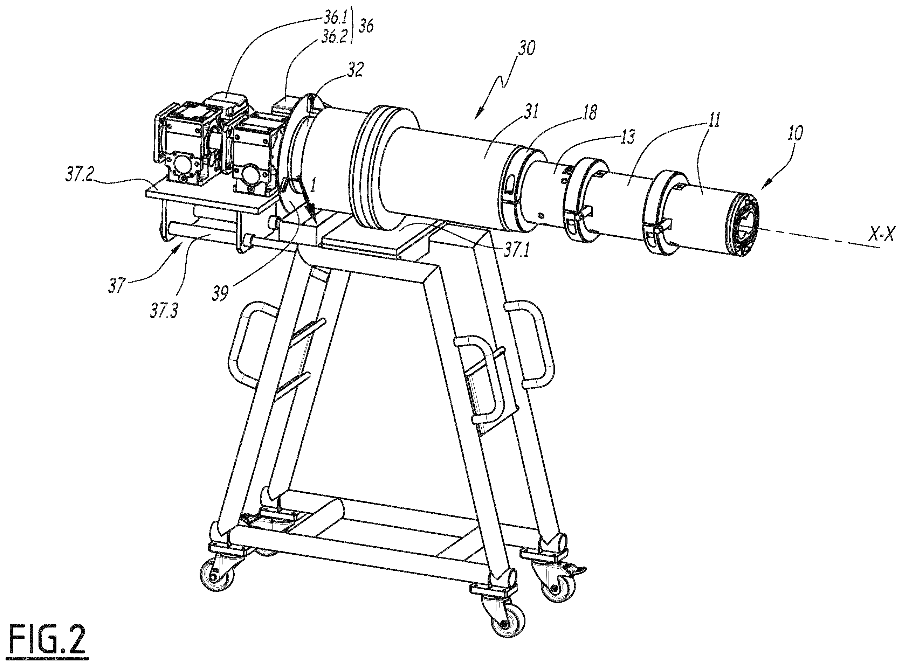

La machine d'extrusion 2 comporte un fourreau 10 de forme allongée, qui s'étend le long d'un axe géométrique X-X et qui est centré sur cet axe. A l'intérieur du fourreau 10, deux vis 20 s'étendent de manière parallèle à l'axe X-X, en étant reçues dans un alésage longitudinal complémentaire du fourreau, centré sur l'axe X-X. En pratique, de manière connue en soi, chaque vis inclut par exemple un arbre de vis central sur lequel est monté un ensemble d'éléments de vis. Les vis s'étendent de part et d'autre de l'axe X-X, tout en étant interpénétrantes, l'alésage du fourreau présentant ainsi un profil transversal bilobé, comme bien visible sur la figure 2 sur laquelle les vis 20 sont omises.

Les vis 20 sont prévues pour être entraînées en rotation sur elles-mêmes, autour de leur axe central, par une unité motrice, non représentée sur les figures, en prise avec l'extrémité amont des vis, à savoir celle de droite sur la figure 1, émergeant à l'extérieur du fourreau 10.

Les vis 20 sont conçues, de par leur profil fileté, pour entraîner la matière première 3 à l'intérieur du fourreau 10 selon l'axe X-X, depuis une partie amont du fourreau 10, dans laquelle les ingrédients de la matière première 3 sont introduits à l'intérieur de l'alésage longitudinal central du fourreau, jusqu'à l'extrémité aval du fourreau 10, les termes « amont » et « aval » étant orientés dans le sens de progression de la matière dans la machine d'extrusion 2 sous l'action des vis 20, ce sens de progression étant de la droite vers la gauche sur les figures 1 à 4.

Le fourreau 10 comporte plusieurs éléments modulaires 11 se succédant le long de l'axe X-X. Chacun des éléments 11 délimite intérieurement une partie correspondante de l'alésage longitudinal central du fourreau 10, ces parties d'alésage étant dans le prolongement les unes des autres, selon l'axe X-X, à l'état assemblé des éléments 11, comme sur les figures. En pratique, les éléments 11 sont assemblés deux à deux par des colliers de fixation 12.

Dans l'exemple de réalisation considéré sur les figures, l'élément le plus en amont parmi les éléments 11 permet d'introduire, à l'intérieur de sa partie d'alésage centrale, les ingrédients de la matière première 3. A cet effet, de manière connue en soi et non détaillée ici, cet élément le plus en amont parmi les éléments 11 est pourvu d'un orifice traversant 11A qui, transversalement à l'axe X-X, ouvre sur l'extérieur la partie d'alésage centrale de cet élément. Plus généralement, on comprend que, parmi les différents éléments 11 du fourreau 10, un ou plusieurs d'entre eux permettent d'introduire, à l'intérieur de l'alésage longitudinal central du fourreau 10, les ingrédients, solides et/ou liquides, de la matière première 3 aux fins de leur traitement par la machine d'extrusion 2.

Comme évoqué dans la partie introductive du présent document, les vis 20 sont conçues pour, en plus d'entraîner la matière à extruder, cisailler et mettre en pression la matière première 3, de manière à la transformer de manière essentiellement mécanique. Cet aspect de la machine d'extrusion 1 étant bien connu dans le domaine, il ne sera pas décrit ici plus avant. De même, également comme évoqué dans la partie introductive, le fourreau 10 est conçu pour réguler la température de la matière à extruder le long du fourreau de façon à transformer cette matière de manière essentiellement thermique. A cet effet, tout ou partie des éléments 11 du fourreau 10 sont thermorégulés et/ou permettent d'injecter dans le fourreau de la vapeur et/ou permettent de dégazer la matière en cours d'extrusion dans le fourreau. Là encore, cet aspect de la machine d'extrusion 1 étant bien connu dans le domaine, il ne sera pas décrit ici plus avant. Plus globalement, le fourreau 10 et les vis 20 sont prévus pour appliquer un traitement thermomécanique à la matière première 3 au fur et à mesure de la progression de cette matière de l'extrémité amont du fourreau jusqu'à l'extrémité aval du fourreau. La matière résultant de ce traitement thermomécanique et sortant du fourreau 10 est référencée 4.

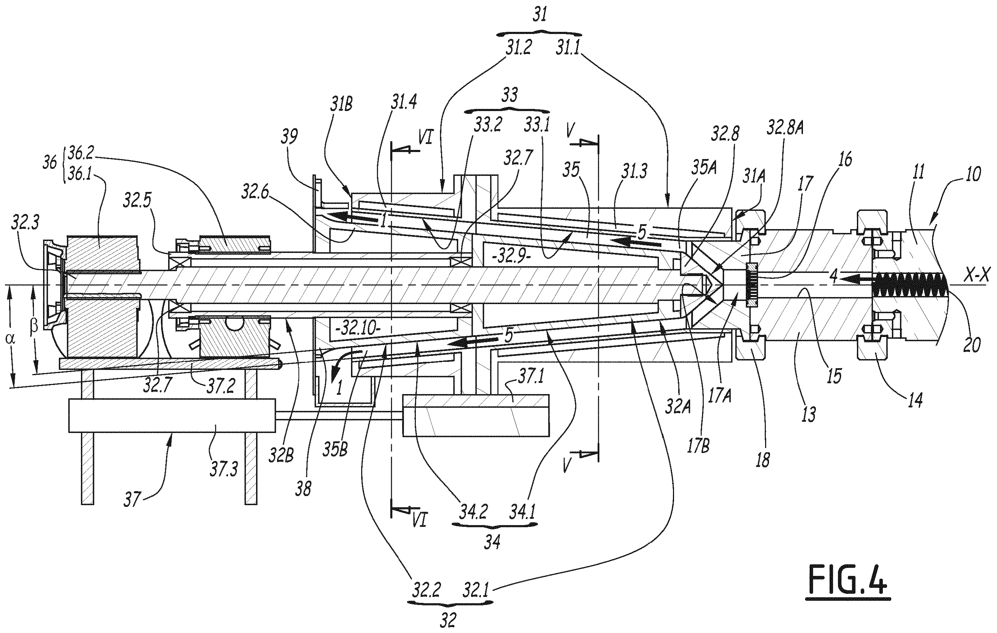

A son extrémité aval, le fourreau 10 comprend une plaque terminale 13, couramment appelée « plaque avant » dans le domaine. La plaque terminale 13 est rapportée fixement, par exemple par un collier de fixation 14, à l'extrémité aval de l'élément le plus en aval, parmi les éléments 11, du fourreau 10. Comme bien visible sur la figure 4, la plaque terminale 13 délimite intérieurement un alésage 15 traversant, qui est centré sur l'axe X-X, en s'étendant dans le prolongement axial de la partie d'alésage central de l'élément le plus en aval parmi les éléments 11, et qui, le cas échéant, reçoit l'extrémité aval des vis 20. Cet alésage 15 est adapté pour canaliser la matière 4 poussée vers l'aval par les vis 20 de manière à assurer une mise en pression et un taux de remplissage appropriés pour l'alésage longitudinal central du fourreau 10. A cet effet, l'alésage 15 est, par exemple, au moins partiellement étranglé vers l'aval et pourvu d'une grille transversale 16. Cet aspect de la machine d'extrusion 2 n'étant pas limitatif de l'invention, il ne sera pas décrit ici plus avant.

La machine d'extrusion 2 comprend également une filière 30 qui, à l'état assemblé de la machine d'extrusion 2, est agencée à l'extrémité aval du fourreau 10. La filière 30 est prévue pour être traversée par la matière 4 aux fins de l'extrusion de cette matière. Ainsi, à l'état assemblé de la machine d'extrusion 1, la matière 4 sortant du fourreau 10 est forcée, sous l'action des vis 20, de s'écouler à travers la filière 30.

Comme bien visible sur les figures 2 à 6, la filière 30 comporte une enveloppe externe 31 et un organe interne 32.

L'enveloppe externe 31 est tubulaire, en étant centrée sur un axe géométrique qui, à l'état assemblé de la machine d'extrusion 2, est confondue avec l'axe X-X et qui sera donc considéré comme étant l'axe X-X par la suite. L'enveloppe externe 31 présente ainsi deux extrémités opposées suivant l'axe X-X, à savoir une extrémité amont 31A et une extrémité aval 31B. De par sa forme tubulaire, l'enveloppe externe 31 présente une face intérieure 33, c'est-à-dire une face tournée vers l'axe X-X, qui est tronconique, centrée sur l'axe X-X et divergente vers l'aval. Dans l'exemple de réalisation considéré sur les figures, la face intérieure tronconique 33 s'étend entre les extrémités amont 31A et aval 31B de l'enveloppe externe 31, en débouchant sur l'extrémité aval 31B. Pour ce qui concerne la face extérieure de l'enveloppe externe 31, ses spécificités géométriques ne sont pas limitatives.

L'organe interne 32 présente, lui aussi, une forme allongée, centrée sur un axe géométrique qui, à l'état assemblé de la machine d'extrusion 2, est confondu avec l'axe X-X et qui sera donc considéré comme étant l'axe X-X par la suite. A l'état assemblé de la machine d'extrusion 2, l'organe interne 32 est coaxial avec l'enveloppe externe 31, en étant partiellement agencé à l'intérieur de cette dernière. L'organe interne 32 inclut ainsi deux parties se succédant suivant l'axe X-X, à savoir une partie amont 32A, qui s'étend au moins partiellement à l'intérieur de l'enveloppe externe 31, et une partie aval 32B, qui s'étend en totalité à l'extérieur de l'enveloppe externe 31. Dans la forme de réalisation considérée sur les figures, la partie amont 32A de l'organe interne 32 s'étend essentiellement à l'intérieur de l'enveloppe externe 31, tout en émergeant, vers l'aval, de l'extrémité aval 31B de l'enveloppe externe 31. Dans tous les cas, la partie amont 32A de l'organe interne 32 présente une face extérieure 34, c'est-à-dire une face tournée à l'opposé de l'axe X-X, qui est tronconique, centrée sur l'axe X-X et divergente vers l'aval. Dans la forme de réalisation considérée sur les figures, la face extérieure tronconique 34 s'étend sur sensiblement toute l'étendue axiale de la partie amont 32A de l'organe interne 32, en émergeant, vers l'aval, de l'extrémité aval 31B de l'enveloppe externe 31.

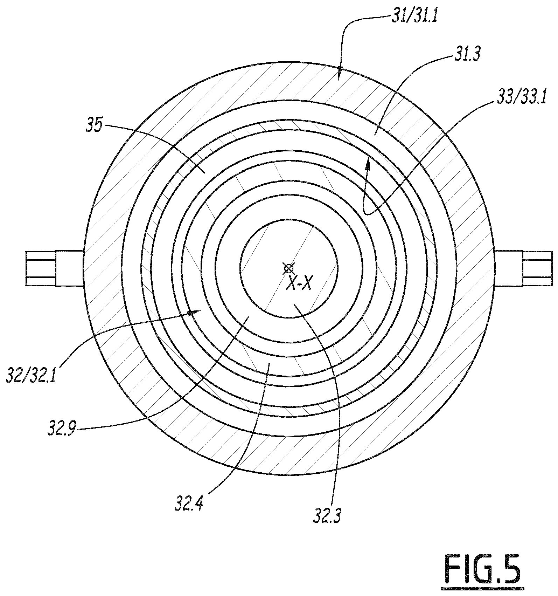

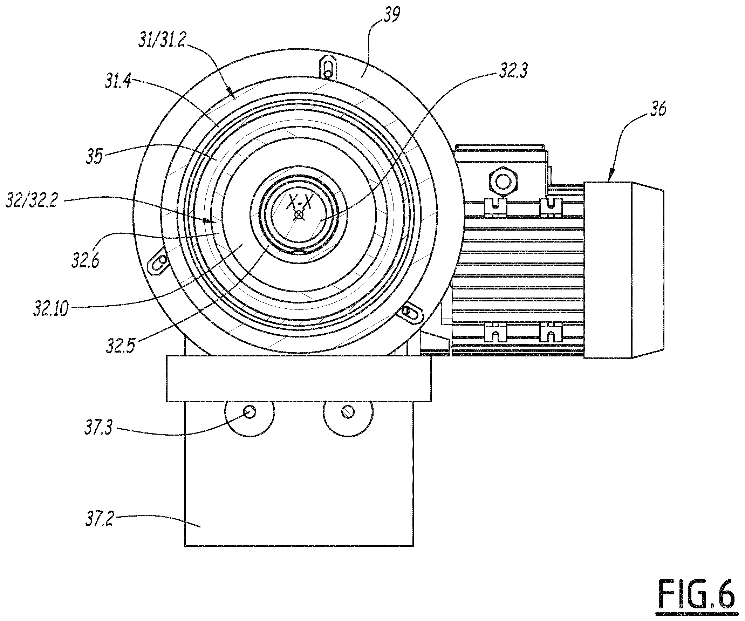

La face intérieure tronconique 33 de l'enveloppe externe 31 et la face extérieure tronconique 34 de l'organe interne 32 délimitent entre elles un canal 35 s'étendant suivant l'axe X-X depuis une extrémité amont 35A du canal 35, tournée vers le fourreau 10, jusqu'à une extrémité aval 35B du canal 35, opposée au fourreau 10. La face intérieure tronconique 33 de l'enveloppe externe 31 délimite le canal 35 en formant la périphérie extérieure du canal, et ce de l'extrémité amont 35A à l'extrémité aval 35B du canal. La face extérieure tronconique 34 de l'organe interne 32 délimite le canal 35 en formant la périphérie intérieure du canal, et ce depuis l'extrémité amont 35A jusqu'à l'extrémité aval 35B du canal. Eu égard à la co-axialité et à la géométrie tronconique des faces intérieure 33 et extérieure 34 le délimitant, le canal 35 présente, sur toute son étendue axiale entre ses extrémités amont 35A et aval 35B, une section transversale, c'est-à-dire une section en coupe perpendiculaire à l'axe X-X, qui est annulaire et centrée sur l'axe X-X, comme bien visible sur les figures 5 et 6. Egalement comme bien visible sur les figures 5 et 6, le canal 35 s'étend continument autour de l'axe X-X, c'est-à-dire sur 360°. En service, la matière 4 provenant du fourreau 10 s'écoule dans le canal 35 pour traverser la filière 30, en progressant dans le canal 35 de l'extrémité amont 35A à l'extrémité aval 35B du canal. La matière s'écoulant dans le canal 35 est référencée 5.

Dans la forme de réalisation considérée sur les figures, la face intérieure tronconique 33 présente une angulation, par rapport à l'axe X-X, qui est constante de l'extrémité amont 35A à l'extrémité aval 35B du canal 35 : autrement dit, en coupe dans un plan contenant l'axe X-X, et ce quel que soit le plan considéré autour de l'axe X-X, la face intérieure tronconique 33 forme un segment rectiligne qui est incliné avec un angle α par rapport à l'axe X-X. Ainsi, cette face 33 est constituée d'un unique tronc de cône dont le demi-angle au sommet est α. De même, la face extérieure tronconique 34 présente une angulation, par rapport à l'axe X-X, qui est constante de l'extrémité amont 35A à l'extrémité aval 35B du canal 35 : en coupe dans un plan contenant l'axe X-X, et ce quel que soit le plan considéré autour de l'axe X-X, la face extérieure tronconique 34 forme un segment rectiligne qui est incliné avec un angle β par rapport à l'axe X-X. Ainsi, cette face 34 est constituée d'un unique tronc de cône dont le demi-angle au sommet est β.

Egalement dans la forme de réalisation considérée sur les figures, la face intérieure tronconique 33 et la face extérieure tronconique 34 sont parallèles l'une à l'autre de l'extrémité amont 35A à l'extrémité aval 35B du canal 35. En d'autres termes, la face intérieure tronconique 33 et la face extérieure tronconique 34 présentent la même angulation par rapport à l'axe X-X, ce qui, ici, revient à dire que les angles α et β sont égaux. Il en résulte que le canal 35 présente une épaisseur, c'est-à-dire une dimension suivant une direction normale aux faces 33 et 34, qui est constante de son extrémité amont 35A à son extrémité aval 35B. Il en résulte également que la section de passage du canal 35, c'est-à-dire l'aire de la section transversale du canal 35, augmente de manière continue depuis son extrémité amont 35A jusqu'à son extrémité aval 35B. En pratique, on comprend que la valeur de l'épaisseur du canal 35 et, par-là, la valeur de la section de passage de ce canal sont directement dépendantes du positionnement relatif entre l'enveloppe externe 31 et l'organe interne 32 suivant l'axe X-X.

Suivant une disposition optionnelle avantageuse, qui est mise en œuvre dans la forme de réalisation considérée sur les figures et dont des intérêts apparaîtront plus loin, l'enveloppe externe 31 comprend plusieurs modules distincts, qui délimitent des parties respectives de la face intérieure tronconique 33, ces parties se succédant les unes aux autres suivant l'axe X-X de manière juxtaposée. Ici, l'enveloppe externe 31 comprend ainsi deux tels modules 31.1 et 31.2 qui délimitent des parties respectives de la face intérieure tronconique 33, à savoir une partie amont 33.1 et une partie aval 33.2 de cette face intérieure tronconique 33. Dans l'exemple de réalisation illustré aux figures, les parties amont 33.1 et aval 33.2 de la face intérieure tronconique 33 s'étendent dans le prolongement rectiligne l'une de l'autre, suivant l'angulation précitée de la face intérieure tronconique 33 par rapport à l'axe X-X.

De même, suivant une disposition optionnelle avantageuse, qui est mise en œuvre dans la forme de réalisation considérée sur les figures et dont des intérêts apparaîtront plus loin, l'organe interne 32 comprend plusieurs modules distincts qui délimitent des parties respectives de la face extérieure tronconique 34, ces parties respectives se succédant les unes aux autres suivant l'axe X-X de manière juxtaposée. Ici, l'organe interne 32 comprend deux tels modules 32.1 et 32.2 qui délimitent des parties respectives de la face extérieure tronconique 34, à savoir une partie amont 34.1 et une partie aval 34.2 de cette face extérieure tronconique 34. Dans l'exemple de réalisation illustré aux figures, les parties amont 34.1 et aval 34.2 de la face extérieure tronconique s'étendent dans le prolongement rectiligne l'une de l'autre, suivant l'angulation précitée de la face extérieure tronconique 34 par rapport à l'axe X-X.

Quelle que soit sa forme de réalisation, l'enveloppe externe 31 est prévue pour être liée fixement au fourreau 10, dans le sens où, à l'état assemblé de la machine d'extrusion 2, le fourreau 10 et l'enveloppe externe 31 sont liés fixement l'un à l'autre. En pratique, l'enveloppe externe 31, en particulier son extrémité amont 32A, est à cet effet solidarisée fixement, de manière directe ou indirecte, à une partie aval du fourreau 10, en particulier à la plaque terminale 13 de ce fourreau. Dans la forme de réalisation considérée sur les figures, la partie aval du fourreau 10, en particulier sa plaque terminale 13, est ainsi solidarisée fixement au module 31.1 de l'enveloppe externe, ce dernier étant lui-même solidarisé fixement au module 31.2 de l'enveloppe externe.

Comme illustré sur les figures, la plaque terminale 13 est prolongée, vers l'aval, par un diffuseur 17 qui assure la liaison fixe entre l'enveloppe externe 31 et la plaque terminale 13. Par exemple, l'enveloppe externe 31, en particulier le module 31.1 de cette dernière, est solidarisée mécaniquement, par tout moyen approprié, au diffuseur 17, ce dernier étant notamment emmanché à l'intérieur de l'enveloppe externe 31, au niveau de l'extrémité amont 32A de cette dernière, tandis que le diffuseur 17 est rapporté accolé à la plaque terminale 13, dans le prolongement axial de cette dernière, et est retenu fixement contre la plaque terminale 13 par un collier de fixation 18.

Quelles que soient les spécificités du diffuseur 17, qui permettent la liaison fixe entre la filière 30 et le fourreau 10, le diffuseur 17 délimite avantageusement une chambre de répartition 17A pour la matière 4 sortant du fourreau, au niveau de la jonction entre le fourreau et la filière 30. A l'état assemblé de la machine d'extrusion 2, cette chambre de répartition 17A relie l'extrémité aval de l'alésage 15 de la plaque terminale 13 à l'extrémité amont 35A du canal 35. La chambre de répartition 17A fait ainsi s'écouler la matière 4 qui sort de la plaque terminale 13 de manière centrée sur l'axe X-X, jusqu'à l'extrémité amont 35A du canal 35. Afin que la matière entrant dans l'extrémité amont 35A du canal 35 soit répartie sur toute l'étendue, autour de l'axe X-X, de cette extrémité amont 35A, la chambre de répartition 17A est façonnée de manière à distribuer la matière autour de l'axe X-X dans l'extrémité amont 35A du canal 35 : à cet effet, dans l'exemple considéré sur les figures, la chambre de répartition 17A est pourvue d'une surface tronconique 17B, qui est centrée sur l'axe X-X et qui diverge vers l'aval, en reliant une partie amont de la chambre de répartition 17A à la face intérieure tronconique 33 de l'enveloppe externe 31.

Quelle que soit sa forme de réalisation, l'organe interne 32 n'est pas, à la différence de l'enveloppe externe 31, prévu fixe par rapport au fourreau 10, mais est prévu rotatif autour de l'axe X-X. Ainsi, au sein de la filière 30, l'organe interne 32 est monté rotatif autour de l'axe X-X par rapport à l'enveloppe externe 31. La face extérieure tronconique 34 de l'organe interne 32 est ainsi tournante sur elle-même autour de l'axe X-X.

Aux fins de l'entraînement de l'organe interne 32 en rotation autour de l'axe X-X, la filière 30 comprend un motorisation 36 qui est accouplée à la partie aval 32B de l'organe interne 32. En pratique, les spécificités techniques de la motorisation 36 et de l'accouplement de cette dernière à la partie aval 32B de l'organe interne 32 ne sont pas limitatives. A titre d'exemple, la motorisation 36 est électrique et la sortie de cette motorisation est, à l'extérieure de l'enveloppe externe 31, en prise, directe ou indirecte, avec la partie aval 32B de l'organe interne 32.

Dans le cadre de la disposition optionnelle présentée plus haut, où l'organe interne 32 comprend plusieurs modules distincts, ces derniers sont avantageusement prévus rotatifs autour de l'axe X-X de manière indépendante les uns des autres. Ainsi, ici, chacun des modules 32.1 et 32.2 est rotatif de manière indépendante de l'autre module, de sorte que les modules 32.1 et 32.2 peuvent tourner autour de l'axe X-X à des vitesses respectives qui sont différentes l'une de l'autre et/ou dans des sens respectifs qui sont opposés l'un à l'autre. A cet effet, la motorisation 36 inclut deux moteurs 36.1 et 36.2 qui sont respectivement propres au module 32.1 et au module 32.2 de l'organe interne 32 : le moteur 36.1 est prévu pour entraîner le module 32.1 en rotation autour de l'axe X-X tandis que le moteur 36.2 est prévu pour entraîner le module 32.2 en rotation autour de l'axe X-X.

A titre d'exemple d'une réalisation possible des modules 32.1 et 32.2 de l'organe interne 32, qui est mise en œuvre sur les figures, le module 32.1 comprend, d'une part, un arbre central 32.3, qui est centré sur l'axe X-X, et dont une partie amont, appartenant à la partie amont 32A de l'organe interne 32, est agencée à l'intérieur de l'enveloppe externe 31 tandis qu'une partie aval de cet arbre central 32.3, appartenant à la partie aval 32B de l'organe interne 32, est située à l'extérieur de l'enveloppe externe 31 où elle est accouplée avec le moteur 36.1, et, d'autre part, une pièce d'étagement 32.4, qui appartient à la partie amont 32A de l'organe interne 32 et qui est agencée à l'intérieur de l'enveloppe externe 31, en étant solidaire de la partie amont de l'arbre central 32.3. La pièce d'étagement 32.4 délimite la partie amont 34.1 de la face extérieure tronconique 34. De son côté, le module 32.2 comporte, d'une part, un arbre tubulaire 32.5, qui est centré sur l'axe X-X et dont une partie amont, appartenant à la partie amont 32A de l'organe interne 32, est agencé à l'intérieur de l'enveloppe externe 31 tandis qu'une partie aval de cet arbre tubulaire 32.5 appartient à la partie aval 32B de l'organe interne 32 et est agencée à l'extérieur de l'enveloppe externe 31 où elle est accouplée au moteur 36.2, et, d'autre part, une pièce d'étagement 32.6, qui appartient à la partie amont 32A de l'organe interne 32 et est agencée à l'intérieur de l'enveloppe externe 31, en étant solidaire de la partie amont de l'arbre tubulaire 32.5. La pièce d'étagement 32.6 délimite la partie aval 34.2 de la face extérieure tronconique 34. L'arbre central 32.3 s'étend à l'intérieur de l'arbre tubulaire 32.5, avec interposition radiale d'un ou de plusieurs paliers 32.7 entre ces arbres 32.3 et 32.5, notamment entre leur partie amont respective et entre leur partie aval respective. Les pièces d'étagement 32.4 et 32.6 sont immédiatement adjacentes l'une à l'autre suivant l'axe X-X, le cas échéant avec interposition axiale d'une interface de découplage entre ces pièces d'étagement, non représentée sur les figures.

Suivant un aménagement possible, qui est mis en œuvre sur les figures, l'extrémité amont de la partie amont 32A de l'organe interne 32 est au moins partiellement agencée dans le diffuseur 17, en délimitant, conjointement avec ce dernier, la chambre de répartition 17A. Dans l'exemple envisagé aux figures, cette extrémité amont de la partie amont 32A de l'organe interne 32 forme une pointe 32.8 présentant une surface conique 32.8A, centrée sur l'axe X-X et divergente vers l'aval. Ici, la pointe 32.8 appartient au module 32.1. La surface conique 32.8A est agencée à l'intérieur de la surface tronconique 17B du diffuseur 17 de manière à ménager la chambre de répartition 17A entre la surface conique 32.8A et la surface tronconique 17B.

Par ailleurs, quelle que soit la forme de réalisation de l'enveloppe externe 31 et de l'organe interne 32, l'une et/ou l'autre de l'enveloppe externe 31 et de la partie amont 32A de l'organe interne 32 sont thermorégulées. Dans l'exemple présenté ici, on considère que l'enveloppe externe 31 est thermorégulée et la partie amont 32A de l'organe interne 32 est thermorégulée, étant entendu qu'en variante, une seule des deux est thermorégulée mais pas l'autre. Ainsi, ici, l'enveloppe externe 31 et la partie amont 32A de l'organe interne 32 sont chacune conçues pour commander leur température de manière à, au moins localement, la maintenir à une valeur déterminée, avantageusement réglable, malgré les échanges thermiques avec leur environnement immédiat. En particulier, l'enveloppe externe 31 est capable d'agir sur la température dans le canal 35, plus précisément sur la température de la matière 5 s'écoulant dans ce canal 35, moyennant un échange thermique entre cette matière 5 et l'enveloppe externe 31 au travers de la face intérieure tronconique 33. De même, la partie amont 32A de l'organe interne 32 est capable d'agir sur la température dans le canal 35, plus précisément sur la température de la matière 5 s'écoulant dans ce canal, moyennant un échange thermique entre cette matière 5 et la partie amont 32A de l'organe interne 32 au travers de la face extérieure tronconique 34.

Dans le cadre de la disposition optionnelle présentée plus haut, où l'enveloppe externe 31 comprend plusieurs modules distincts, ces derniers sont avantageusement thermorégulés de manière indépendante les uns des autres. A cette fin, dans l'exemple de réalisation considéré sur les figures, les modules 31.1 et 31.2 de l'enveloppe externe 31 sont chacun pourvus d'un conduit 31.3, 31.4 pour la circulation d'un fluide thermorégulateur, par exemple de l'eau sous pression. Le conduit 31.3 du module 31.1 s'étend autour et selon l'axe X-X et ceinture la partie amont 33.1 de la face intérieure tronconique 33, en en étant séparé par une paroi thermoconductrice du module 31.1. Le conduit 31.4 s'étend autour et selon l'axe X-X et ceinture la partie aval 33.2 de la face intérieure tronconique 33, en en étant séparé par une paroi thermoconductrice du module 31.2. En fonctionnement, chacun des conduits 31.3 et 31.4 est alimenté par un fluide thermorégulateur et fait circuler ce dernier globalement dans la direction de l'axe X-X pour appliquer un profil de température le long de la partie du canal 35, délimitée par, respectivement, les parties amont 33.1 et aval 33.2 de la face intérieure tronconique 33, notamment de manière que la température de la matière 5 s'écoulant dans le canal 35 soit ajustée, par exemple abaissée ou maintenue constante, au fur et à mesure de la progression de cette matière 5 dans le canal vers l'aval. Bien entendu, chacun des modules 31.1 et 31.2 de l'enveloppe externe 31 comporte une arrivée de fluide thermorégulateur, qui permet d'alimenter le conduit 31.3, respectivement 31.4, depuis l'extérieur de l'enveloppe externe 31, et une sortie de fluide thermorégulateur, qui permet d'évacuer le fluide depuis le conduit correspondant vers l'extérieur de l'enveloppe externe, ces arrivées et sorties de fluide régulateur des modules 31.1 et 31.2 n'étant pas représentées sur les figures. Dans la mesure où les conduits 31.3 et 31.4 sont distincts, ils peuvent avantageusement appliquer des profils de température respectifs qui sont différents l'un de l'autre, par exemple en prévoyant que la matière 5 s'écoulant dans le canal 35 est davantage refroidie par échange thermique au niveau du module 31.1 que par échange thermique au niveau du module 31.2.

Bien entendu, la forme de réalisation qui vient d'être décrite en lien avec les modules 31.1 et 31.2 n'est qu'une possibilité de réalisation pour, plus généralement, des moyens de thermorégulation de l'enveloppe externe 31, adaptés pour appliquer un profil de température le long du canal 35 depuis son extrémité amont 35A à son extrémité aval 35B, notamment de manière que la température de la matière 5 s'écoulant dans le canal 35 soit ajustée, par exemple abaissée ou maintenue constante, au fur et à mesure de sa progression dans le canal vers l'aval.

Dans le cadre de la disposition optionnelle présentée plus haut, où l'organe interne 32 comporte plusieurs modules distincts, ces derniers sont avantageusement thermorégulés de manière indépendante les uns des autres. Ainsi, dans l'exemple de réalisation considéré ici, les modules 32.1 et 32.2 de l'organe interne 32 comportent chacun un conduit 32.9, 32.10 pour la circulation d'un fluide thermorégulateur, par exemple de l'eau sous pression. Le conduit 32.9 s'étend autour et selon l'axe X-X et est ceinturé par la partie amont 34.1 de la face extérieure tronconique 34, en en étant séparé par une paroi thermoconductrice du module 32.1. Le conduit 32.9 est par exemple délimité entre l'arbre central 32.3 et la pièce d'étagement 32.4. Le conduit 32.10 s'étend autour et selon l'axe X-X et est ceinturé par la partie aval 34.2 de la face extérieure tronconique 34, en en étant séparé par une paroi thermoconductrice du module 32.2. Le conduit 32.10 est par exemple délimité entre l'arbre tubulaire 32.5 et la pièce d'étagement 32.6. En fonctionnement, chacun des conduits 32.9 et 32.10 est alimenté par un fluide thermorégulateur et fait circuler ce dernier globalement dans la direction de l'axe X-X pour appliquer un profil de température le long de la partie du canal 35, ceinturant respectivement les parties amont 34.1 et aval 34.2 de la face extérieure tronconique 34, notamment de manière que la température de la matière 5 s'écoulant dans le canal 35 soit ajustée, par exemple abaissée ou maintenue constante, au fur et à mesure de sa progression dans le canal vers l'aval. Bien entendu, chacun des modules 32.1 et 32.2 comporte une arrivée de fluide thermorégulateur, qui permet d'alimenter le conduit correspondant 32.9, respectivement 32.10, depuis l'extérieur de l'organe interne 32, et une sortie de fluide thermorégulateur, qui permet d'évacuer le fluide thermorégulateur depuis le conduit correspondant vers l'extérieur de l'organe interne 32, les arrivées et sorties de fluide thermorégulateur des modules 32.1 et 32.2 n'étant pas représentées sur les figures. En pratique, eu égard au montage rotatif des modules 32.1 et 32.2 autour de l'axe X-X, les arrivées et sorties de fluide thermorégulateur précitées intègrent par exemple des joints tournants. Dans la mesure où les conduits 32.9 et 32.10 sont distincts, ils peuvent avantageusement appliquer des profils de température respectifs qui sont différents l'un de l'autre, par exemple en prévoyant que la matière 5 s'écoulant dans le canal 35 est davantage refroidie par échange thermique au niveau du module 32.1 que par échange thermique au niveau du module 32.2.

Bien entendu, la forme de réalisation qui vient d'être décrite en lien avec les modules 32.1 et 32.2 n'est qu'une possibilité de réalisation pour, plus généralement, des moyens de thermorégulation de la partie amont 32A de l'organe interne 32, adaptés pour appliquer un profil de température le long du canal 35 depuis son extrémité amont 35A à son extrémité aval 35B, notamment de manière que la température de la matière 5 soit abaissée ou maintenue constante au fur et à mesure de sa progression dans le canal 35 vers l'aval.

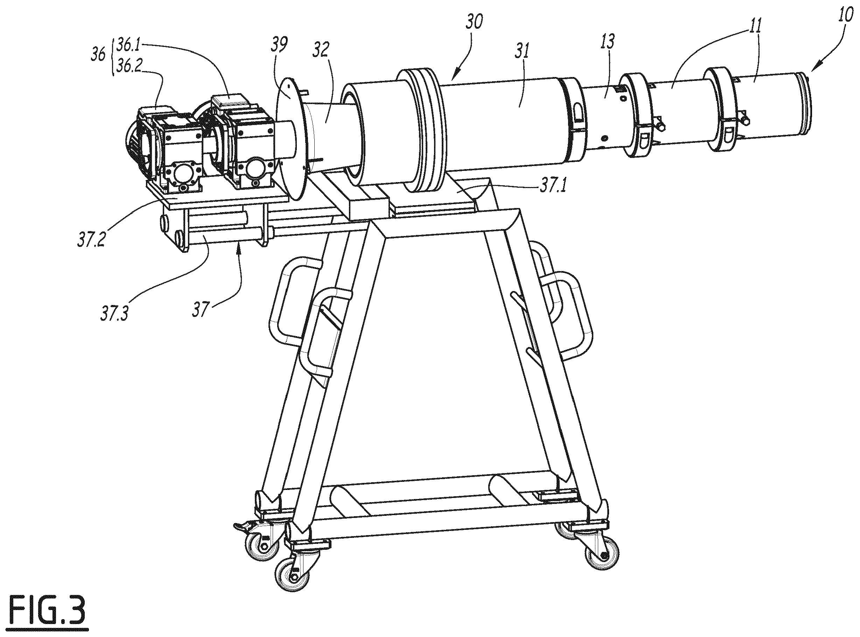

Quelle que soit la forme de réalisation de l'enveloppe externe 31 et de l'organe interne 32, la filière 30 comporte optionnellement un aménagement complémentaire particulièrement avantageux, qui est illustré aux figures et selon lequel la position de l'organe interne 32 par rapport à l'enveloppe externe 31 suivant l'axe X-X est modifiable de manière réglable par un dispositif de réglage 37 ad hoc. La figure 3 illustre ainsi la filière 30 dans une configuration où l'organe interne 32 occupe une position le long de l'axe X-X qui est davantage décalée vers l'aval par rapport à l'enveloppe externe 31, comparativement à la position qu'occupe l'organe interne 32 dans la configuration illustrée par les autres figures. En pratique, le dispositif de réglage 37 présente de multiples formes de réalisation possibles. Dans l'exemple considéré sur les figures, le dispositif de réglage 37 comprend une embase amont 37.1, qui est liée fixement à l'enveloppe externe 31 suivant l'axe X-X, une embase aval 37.2, qui est liée fixement à l'organe interne 32 suivant l'axe X-X, et un mécanisme d'écartement 37.3, qui relie les embases amont 37.1 et aval 37.2 et qui est conçu pour écarter ces dernières l'une de l'autre de manière réglable suivant l'axe X-X. Ici, le mécanisme d'écartement 37.3 comprend par exemple un ou plusieurs vérins hydrauliques ou mécaniques, mais cet exemple de réalisation n'est pas limitatif. L'embase amont 37.1 est par exemple solidarisée fixement à l'enveloppe externe 31, en particulier à l'un et/ou l'autre des modules 31.1 et 31.2, et ce par tout moyen approprié. L'embase aval 37.2 est, quant à elle, avantageusement conçue pour, par exemple, supporter de manière fixe suivant l'axe X-X la motorisation 36 et la partie aval 32B de l'organe interne 32 qui est accouplée avec cette dernière.

Quelle que soit la forme de réalisation du dispositif de réglage 37, ce dernier permet de commander la position, suivant l'axe X-X de l'organe interne 32 par rapport à l'enveloppe externe 31. Les intérêts de cet aménagement de la filière 30 sont multiples. Ainsi, comme expliqué plus haut, en modifiant le positionnement relatif de l'organe interne 32 de l'enveloppe externe 31 suivant l'axe X-X, on modifie les caractéristiques géométriques du canal 35, telles que son épaisseur et sa section de passage. Par ailleurs, le nettoyage du canal 35 et/ou la maintenance de la filière 30 sont facilités lorsqu'on peut écarter substantiellement l'organe interne 32 de l'enveloppe externe 31 vers l'aval. En pratique, le dispositif de réglage 37 est actionnable alors que la machine d'extrusion 2 est à l'arrêt et/ou alors que la machine d'extrusion 2 est en service. L'actionnement correspondant du dispositif de réglage 37 est manuel ou bien asservi à une consigne opératoire qui est prédéterminée ou calculée en temps réel à partir de mesures relatives à des paramètres de fonctionnement de la machine d'extrusion 2, tels que par exemple, le couple résistif des vis 20, et/ou à partir de mesures relatives à des caractéristiques de la matière traitée par la machine d'extrusion 2, telles que, par exemple, la composition de la matière première 3 ou la viscosité de la matière 2 sortant 4 du fourreau 10.

Suivant un autre aménagement possible, également mis en œuvre dans le mode de réalisation considéré sur les figures, la filière 30 comporte un déflecteur de sortie 38 qui est lié fixement à l'organe interne 32. Ainsi, le déflecteur de sortie 38 est, conjointement avec l'organe interne 32, rotatif autour de l'axe X-X par rapport à l'enveloppe externe 31. La forme de réalisation pour la liaison fixe entre le déflecteur de sortie 38 et l'organe interne 32 n'est pas limitative de l'invention : ici, le déflecteur de sortie 38 est intégré à la partie amont 32A de l'organe interne 32, notamment à la pièce d'étagement 32.6 du module 32.2 de l'organe interne 32. Dans tous les cas, le déflecteur de sortie 38 est agencé au niveau de l'extrémité aval 35B du canal 35 de manière à exercer une contre-pression vis-à-vis de l'écoulement de la matière sortant du canal 35. En pratique, suivant l'axe X-X, le déflecteur 38 peut occuper soit exactement la même position que l'extrémité aval 35B du canal 35, soit être légèrement décalé en aval de cette extrémité aval 35B comme dans l'exemple envisagé sur les figures. Dans tous les cas, le déflecteur de sortie 38 est conçu pour interférer physiquement, dans la direction de l'axe X-X, avec la matière 5 sortant du canal 35 via l'extrémité aval 35B de ce dernier. Autrement dit, le déflecteur de sortie 38 induit une résistance axiale à l'écoulement de la matière 5 sortant du canal 35. A cet effet, le déflecteur de sortie 38 est par exemple évasé vers l'aval, par rapport à la face extérieure tronconique 34 de l'organe interne 32.

On va maintenant décrire le fonctionnement de la machine d'extrusion 2.

Les ingrédients de la matière première 3 sont introduits à l'intérieur du fourreau 10, via au moins l'un de ses éléments 11, puis sont entraînés vers l'aval par les vis 20, tout en étant transformés sous l'effet du traitement thermomécanique appliqué par le fourreau et les vis. La matière 4 sortant de l'élément le plus en aval, parmi les éléments 11, du fourreau 10 est poussée à travers successivement la plaque terminale 13, le diffuseur 17 et la filière 30. La matière 4 entre dans la filière 30 après avoir traversé la chambre de répartition 17A dans laquelle la matière 4 est avantageusement distribuée autour de l'axe X-X par le diffuseur 17. A l'intérieur de la filière 30, la matière 5 s'écoule dans le canal 35, depuis l'extrémité amont 35A de ce dernier jusqu'à son extrémité aval 35B. Après avoir été, le cas échéant, retenue par contre-pression sous l'effet du déflecteur de sortie 38, la matière 5 sort à l'extérieur de l'enveloppe externe 31 via l'extrémité aval 35B du canal 35. En s'échappant ainsi à l'extérieur de l'enveloppe externe 31, la matière 5 sort de la filière 30 et forme le produit alimentaire 1.

Au fur et à mesure de son écoulement le long du canal 35, la matière 5 est cisaillée par deux composantes de cisaillement différentes, qui se cumulent, à savoir :
- une première composante de cisaillement, qui résulte de l'adhésion de la matière 5 à la face intérieure tronconique 33 de l'enveloppe externe 31 et/ou à la face extérieure tronconique 34 de l'organe interne 32, du fait de l'ajustement de température qu'appliquent l'enveloppe externe 31 et/ou l'organe interne 32 à la matière 5 au travers de leur face 33 et 34, et
- une seconde composante de cisaillement, qui résulte de l'enroulement de la matière 5 autour de la face extérieure tronconique 34 de l'organe interne 32, du fait de l'entraînement en rotation autour de l'axe X-X de cet organe interne 32 par la motorisation 36.

Il en résulte une fibration substantielle de la matière 5 s'écoulant dans le canal 35, cette fibration étant opérée sous le double effet de l'ajustement de température de la matière 5, commandé par la thermorégulation de l'enveloppe externe 31 et/ou de l'organe interne 32, et de l'enroulement de l'écoulement de la matière 5, provoqué par la mise en rotation de l'organe interne 32. Ainsi, à sa sortie du canal 35, le produit alimentaire 1 présente une texturation qualitative et quantitative, même si, du fait de la dimension axiale limitée du canal 35, son temps de traitement dans la filière 30 est court, notamment comparativement à des filières existantes utilisées pour obtenir une texturation similaire. La machine d'extrusion 2 permet donc de préparer en continu, à partir de la matière première 3, le produit alimentaire 1 avec différentes structures fibreuses.

Il est possible de modifier le taux de cisaillement appliqué à la matière 5 s'écoulant dans le canal 35 et donc de modifier les caractéristiques de la fibration de cette matière 5, en jouant sur :
- la vitesse de rotation de l'organe interne 32, en particulier les vitesses respectives des modules 32.1 et 32.2 de cet organe interne, et/ou
- le sens de rotation de l'organe interne 32, en particulier les sens de rotation respectifs des modules 32.1 et 32.2, et/ou
- le profil de température appliqué par les moyens de thermorégulation de l'enveloppe externe 31, en particulier les profils de température respectivement appliqués par les conduits 31.3 et 31.4 des modules 31.1 et 31.2 de l'enveloppe externe 31, et/ou
- le profil de température appliqué par les moyens de thermorégulation de l'organe interne 32, en particulier les profils de température qui sont respectivement appliqués par les conduits 32.9 et 32.10 des modules 32.1 et 32.2 de l'organe interne 32, et/ou
- la position de l'organe interne 32 par rapport à l'enveloppe externe 31 suivant l'axe X-X.

Ainsi, en commandant la thermorégulation opérée par l'enveloppe externe 31 et/ou par l'organe interne 32 et/ou en commandant la mise en rotation de l'organe interne 32 par la motorisation 36 et/ou en commandant la position axiale réglée par le dispositif de réglage 37, la filière 30 est pilotable dans le sens où elle permet d'obtenir le produit alimentaire 1 avec diverses textures, et ce de manière contrôlée et reproductible.

Divers aménagements et variantes à la machine d'extrusion 2 décrite jusqu'ici sont par ailleurs envisageables. A titre d'exemples, on liste ci-après divers aspects correspondants, qui peuvent être considérés isolément avec ce qui précède ou bien en combinaison entre eux :
- A la différence de la forme de réalisation illustrée aux figures, où les angulations respectives, par rapport à l'axe X-X, de la face intérieure tronconique 33 et de la face extérieure tronconique 34 sont constantes entre les extrémités amont 35A et aval 35B du canal 35, une alternative consiste à prévoir que l'une et/ou l'autre de ces faces 33 et 34 présente chacune au moins deux parties qui sont inclinées par rapport à l'axe X-X avec des angles respectifs qui sont différents l'un de l'autre. Cela revient à dire que, à la différence de la forme de réalisation illustrée où chacune des faces 33 et 34 est constituée d'un unique tronc de cône, l'une et/ou l'autre de ces faces 33 et 34 est alors constituée d'au moins deux troncs de cône coaxiaux, qui se succèdent suivant l'axe X-X de manière juxtaposée et dont les angles au sommet respectifs sont différents l'un de l'autre. Dans le cas où la face intérieure tronconique 33 de l'enveloppe externe 31 est ainsi constituée de tels troncs de cône, une forme de réalisation pratique et économique consiste à ce que différents troncs de cône soient respectivement délimités par des modules distincts de cette enveloppe externe 31, tels que les modules 31.1 et 31.2 : dans ce cas-là, les parties de la face intérieure tronconique 33 respectivement délimitées par les modules 31.1 et 31.2 sont inclinées par rapport à l'axe X-X avec des angles respectifs qui sont différents l'un de l'autre et dont les valeurs respectives sont croissantes vers l'aval. De même, dans le cas où la face extérieure tronconique 34 est ainsi constituée de tels troncs de cône, une forme de réalisation pratique et économique consiste à ce que ces différents troncs de cône soient respectivement délimités par des modules distincts de l'organe interne 32, tels que les modules 32.1 et 32.2 : dans ce cas-là, les parties amont 34.1 et aval 34.2 de la face extérieure tronconique 34, respectivement délimitées par les modules 32.1 et 32.2, sont inclinées par rapport à l'axe X-X avec des angles respectifs qui sont différents l'un de l'autre et dont les valeurs respectives sont croissantes vers l'aval.
- A la différence de la forme de réalisation illustrée aux figures, où la face intérieure tronconique 33 et la face extérieure tronconique 34 sont parallèles l'une à l'autre de l'extrémité amont 35A à l'extrémité aval 35B du canal 35, une alternative consiste à prévoir que ces faces 33 et 34 présentent des angulations respectives par rapport à l'axe X-X qui sont différentes l'une de l'autre au moins sur une partie axiale du canal 35. Cette alternative est envisageable aussi bien dans le cas où les faces 33 et 34 sont respectivement constituées d'un unique tronc de cône, que dans le cas où l'une et/ou l'autre de ces faces 33 et 34 sont chacune constituées d'au moins deux troncs de cône, comme détaillé ci-dessus. Dans le cas où les faces 33 et 34 sont chacune constituées d'un unique tronc de cône, cela revient à ce que les angles α et β, tels que définis précédemment, soient différents l'un de l'autre. Cette différence entre les angles α et β ou, plus généralement, la différence entre les angulations respectives des faces 33 et 34 peut être prévue de manière à maintenir sensiblement constante la section de passage du canal 35 sur tout ou partie de son étendue axiale, moyennant la diminution de son épaisseur depuis son extrémité amont 35A jusqu'à son extrémité aval 35B.
- L'organe interne 32 peut être équipé d'un outil 39 de morcellement de la matière 5 sortant à l'extérieur de l'enveloppe externe 31. Les spécificités de réalisation de cet outil de morcellement 39 ne sont pas limitatives, étant uniquement noté que cet outil de morcellement met à profit l'entraînement en rotation de l'organe interne 32 pour agir sur le produit alimentaire 1 à sa sortie du canal 35.

## Revendications

1. Système de préparation en continu d'un produit alimentaire (1) extrudé, comprenant :
- une matière première (3) qui est riche en protéines et en eau,
- un fourreau (10) à l'intérieur duquel est entraînée au moins une vis (20) de manière à appliquer un traitement thermomécanique à la matière première, et
- une filière (30) pour l'extrusion d'une matière riche en protéines et en eau, la filière comprenant :
- une enveloppe externe (31), qui est tubulaire, en étant centrée sur un axe (X-X), et qui présente une face intérieure tronconique (33), centrée sur l'axe et divergente vers l'aval, cette enveloppe externe (31) étant liée fixement au fourreau (10) de manière que la matière (4) sortant du fourreau est poussée par la ou les vis (20) à travers la filière, et
- un organe interne (32), qui est coaxial avec l'enveloppe externe (31) et monté rotatif autour de l'axe (X-X) par rapport à l'enveloppe externe, et qui inclut à la fois :
- une partie amont (32A), s'étendant au moins partiellement à l'intérieur de l'enveloppe externe et présentant une face extérieure tronconique (34), centrée sur l'axe et divergente vers l'aval, et
- une partie aval (32B), s'étendant à l'extérieur de l'enveloppe externe et accouplée à une motorisation (36) adaptée pour entraîner l'organe interne en rotation autour de l'axe (X-X),
dans lequel l'enveloppe externe (31) et/ou la partie amont (32A) de l'organe interne (32) sont thermorégulées,
dans lequel la face intérieure tronconique (33) de l'enveloppe externe (31) et la face extérieure tronconique (34) de l'organe interne (32) délimitent entre elles un canal (35) présentant une extrémité amont (35A) et une extrémité aval (35B), qui sont opposées l'une à l'autre suivant l'axe (X-X) et entre lesquelles la matière (5) s'écoule dans le canal de manière que, lorsque la matière est poussée à travers la filière (30), la matière progresse dans le canal depuis l'extrémité amont jusqu'à l'extrémité aval par laquelle la matière sort à l'extérieur de l'enveloppe externe,
**caractérisé en ce que** le fourreau (10) comporte, à son extrémité aval, une plaque terminale (13) qui délimite intérieurement un alésage (15) traversant, centré sur l'axe (X-X) et canalisant la matière (4) poussée par la ou les vis (20) hors du fourreau, et dans lequel le système comporte également un diffuseur (17), qui lie fixement la plaque terminale (13) et l'enveloppe externe (31) et qui délimite une chambre de répartition (17A) reliant l'alésage (15) de la plaque terminale et l'extrémité amont (35A) du canal (35), cette chambre de répartition étant façonnée de manière à distribuer la matière (4) sortant du fourreau (10) autour de l'axe (X-X) dans l'extrémité amont (35A) du canal (35).

2. Système suivant la revendication 1, dans lequel la filière (30) comporte un dispositif de réglage (37), adapté pour modifier de manière réglable la position de l'organe interne (32) par rapport à l'enveloppe externe (31) suivant l'axe (X-X).

3. Système suivant l'une des revendications 1 ou 2, dans lequel l'enveloppe externe (31) est pourvue de moyens de thermorégulation (31.3, 31.4) adaptés pour agir sur la température de la matière (5) s'écoulant dans le canal (35) par échange thermique avec la face intérieure tronconique (33) et pour appliquer un profil de température le long du canal entre les extrémités amont (35A) et aval (35B) de ce canal.

4. Système suivant l'une quelconque des revendications précédentes, dans lequel la partie amont (32A) de l'organe interne (32) est pourvue de moyens de thermorégulation (32.9, 32.10) adaptés pour agir sur la température de la matière (5) s'écoulant dans le canal (35) par échange thermique avec la face extérieure tronconique (34) et pour appliquer un profil de température le long du canal entre les extrémités amont (35A) et aval (35B) de ce canal.

5. Système suivant l'une quelconque des revendications précédentes, dans lequel l'enveloppe externe (31) comprend au moins deux modules distincts (32.1, 32.2) qui délimitent des parties respectives (33.1, 33.2) de la face intérieure tronconique (33), se succédant l'une à l'autre suivant l'axe (X-X) de manière juxtaposée.

6. Système suivant la revendication 5, dans lequel les au moins deux modules (31.1, 31.2) de l'enveloppe externe (31) sont thermorégulés de manière indépendante l'un de l'autre.

7. Système suivant l'une des revendications 5 ou 6, dans lequel les parties (33.1, 33.2) de la face intérieure tronconique (33), respectivement délimitées par les au moins deux modules (31.1, 31.2) de l'enveloppe externe (31), sont inclinées par rapport à l'axe (X-X) avec des angles respectifs qui sont différents l'un de l'autre.

8. Système suivant l'une quelconque des revendications précédentes, dans lequel l'organe interne (32) comprend au moins deux modules distincts (32.1, 32.2) qui délimitent des parties respectives (34.1, 34.2) de la face extérieure tronconique (34), se succédant l'une à l'autre suivant l'axe (X-X) de manière juxtaposée.

9. Système suivant la revendication 8, dans lequel les au moins deux modules (32.1, 32.2) de l'organe interne (32) sont rotatifs autour de l'axe (X-X) de manière indépendante l'un de l'autre.

10. Système suivant l'une des revendications 8 ou 9, dans lequel les au moins deux modules (32.1, 32.2) de l'organe interne (32) sont thermorégulés de manière indépendante l'un de l'autre.

11. Système suivant l'une quelconque des revendications 8 à 10, dans lequel les parties (34.1, 34.2) de la face extérieure tronconique (34), respectivement délimitées par les au moins deux modules (32.1, 32.2) de l'organe interne (32), sont inclinées par rapport à l'axe (X-X) avec des angles respectifs qui sont différents l'un de l'autre.

12. Système suivant l'une quelconque des revendications précédentes, dans lequel la face intérieure tronconique (33) de l'enveloppe externe (31) et la face extérieure tronconique (34) de l'organe interne (32) sont parallèles l'une à l'autre de l'extrémité amont (35A) à l'extrémité aval (35B) du canal (35).

13. Système suivant l'une quelconque des revendications 1 à 11, dans lequel la face intérieure tronconique (33) de l'enveloppe externe (31) et la face extérieure tronconique (34) de l'organe interne (32) présentent des angulations respectives par rapport à l'axe (X-X) qui sont différentes l'une de l'autre au moins sur une partie axiale du canal (35).

14. Système suivant l'une quelconque des revendications précédentes, dans lequel la chambre de répartition (17A) est pourvue d'une surface tronconique (17B), qui est centrée sur l'axe (X-X) et qui diverge vers l'aval, en reliant une partie amont de la chambre de répartition (17A) à la face intérieure tronconique (33) de l'enveloppe externe (31).

15. Système suivant l'une quelconque des revendications précédentes, dans lequel une extrémité amont de la partie amont (32A) de l'organe interne (32) est au moins partiellement agencée dans le diffuseur (17), en délimitant, conjointement avec le diffuseur, la chambre de répartition (17A).

## Patentansprüche

1. System zur kontinuierlichen Herstellung eines extrudierten Nahrungsmittels (1), umfassend:
- ein Rohmaterial (3), das reich an Proteinen und an Wasser ist,
- eine Hülse (10), in deren Innerem mindestens eine Schnecke (20) angetrieben wird, um das Rohmaterial einer thermomechanischen Behandlung zu unterziehen, und
- eine Düse (30) zum Extrudieren eines Materials, das reich an Proteinen und Wasser ist, die Düse umfassend:
- eine äußere Hülle (31), die rohrförmig ist, indem sie auf einer Achse (X-X) zentriert ist, und die eine kegelstumpfförmige Innenseite (33) aufweist, die auf der Achse zentriert ist und stromabwärts divergiert, wobei diese äußere Hülle (31) fest mit der Hülse (10) verbunden ist, sodass das aus der Hülse austretende Material (4) durch die Schnecke(n) (20) durch die Düse gedrückt wird, und
- ein inneres Element (32), das koaxial zu der äußeren Hülle (31) ist und drehbar um die Achse (X-X) in Bezug auf die äußere Hülle montiert ist, und das gleichzeitig Folgendes beinhaltet:
- einen stromaufwärtigen Abschnitt (32A), der sich zumindest teilweise innerhalb der äußeren Hülle erstreckt und eine kegelstumpfförmige Außenseite (34) aufweist, die auf der Achse zentriert ist und stromabwärts divergiert, und
- einen stromabwärtigen Abschnitt (32B), der sich außerhalb der äußeren Hülle erstreckt und mit einem Motorantrieb (36) gekoppelt ist, der angepasst ist, um das innere Element in Drehung um die Achse (X-X) zu versetzen,
wobei die äußere Hülle (31) und/oder der stromaufwärtige Abschnitt (32A) des inneren Elements (32) temperaturgesteuert sind,
wobei die kegelstumpfförmige Innenseite (33) der äußeren Hülle (31) und die kegelstumpfförmige Außenseite (34) des inneren Elements (32) untereinander einen Kanal (35) begrenzen, der ein stromaufwärtiges Ende (35A) und ein stromabwärtiges Ende (35B) aufweist, die einander entlang der Achse (X-X) gegenüberliegen und zwischen denen das Material (5) in dem Kanal fließt, sodass, wenn das Material durch die Düse (30) gedrückt wird, das Material in dem Kanal von dem stromaufwärtigen Ende bis zu dem stromabwärtigen Ende fortschreitet, durch das das Material außerhalb der äußeren Hülle austritt,
**dadurch gekennzeichnet, dass** die Hülse (10) an ihrem stromabwärtigen Ende eine Endplatte (13) aufweist, die innen eine durchgehende Bohrung (15) begrenzt, die auf der Achse (X-X) zentriert ist und das Material (4) kanalisiert, das von der oder den Schnecken (20) aus der Hülse gedrückt wird, und wobei das System auch einen Diffusor (17) aufweist, der die Endplatte (13) und die äußere Hülle (31) fest verbindet und der eine Verteilerkammer (17A) begrenzt, die die Bohrung (15) der Endplatte und das stromaufwärtige Ende (35A) des Kanals (35) verbindet, wobei diese Verteilerkammer geformt ist, um das aus der Hülse (10) austretende Material (4) um die Achse (X-X) in das stromaufwärtige Ende (35A) des Kanals (35) zu verteilen.

2. System nach Anspruch 1, wobei die Düse (30) eine Einstellvorrichtung (37) umfasst, die angepasst ist, um die Position des inneren Elements (32) in Bezug auf die äußere Hülle (31) entlang der Achse (X-X) einstellbar zu verändern.

3. System nach einem der Ansprüche 1 oder 2, wobei die äußere Hülle (31 ) mit Temperaturgulierungseinrichtungen (31.3, 31.4) versehen ist, die geeignet sind, die Temperatur des in dem Kanal (35) fließenden Materials (5) durch Wärmeaustausch mit der kegelstumpfförmigen Innenseite (33) zu beeinflussen und ein Temperaturprofil entlang des Kanals zwischen dem stromaufwärtigen (35A) und dem stromabwärtigen (35B) Ende dieses Kanals anzuwenden.

4. System nach einem der vorherigen Ansprüche, wobei der stromaufwärtige Abschnitt (32A) des inneren Elements (32) mit Temperaturgulierungseinrichtungen (32.9, 32.10) versehen ist, die geeignet sind, die Temperatur des durch den Kanal (35) fließenden Materials (5) durch Wärmeaustausch mit der kegelstumpfförmigen Außenseite (34) zu beeinflussen und ein Temperaturprofil entlang des Kanals zwischen dem stromaufwärtigen (35A) und dem stromabwärtigen (35B) Ende dieses Kanals anzuwenden.

5. System nach einem der vorherigen Ansprüche, wobei die äußere Hülle (31) mindestens zwei verschiedene Module (32.1, 32.2) umfasst, die jeweilige Abschnitte (33.1, 33.2) der kegelstumpfförmigen Innenseite (33) begrenzen, die entlang der Achse (X-X) nebeneinander aufeinander folgen.

6. System nach Anspruch 5, wobei die mindestens zwei Module (31.1, 31.2) der äußeren Hülle (31) unabhängig voneinander temperaturgesteuert sind.

7. System nach einem der Ansprüche 5 oder 6, wobei die Abschnitte (33.1, 33.2) der kegelstumpfförmigen Innenseite (33), die jeweils von den mindestens zwei Modulen (31.1, 31.2) der äußeren Hülle (31) begrenzt sind, in Bezug auf die Achse (X-X) mit jeweiligen Winkeln geneigt sind, die sich voneinander unterscheiden.

8. System nach einem der vorherigen Ansprüche, wobei das innere Element (32) mindestens zwei verschiedene Module (32.1, 32.2) umfasst, die jeweilige Abschnitte (34.1, 34.2) der kegelstumpfförmigen Außenseite (34) begrenzen, die entlang der Achse (X-X) nebeneinander aufeinander folgen.

9. System nach Anspruch 8, wobei die mindestens zwei Module (32.1, 32.2) des inneren Elements (32) unabhängig voneinander um die Achse (X-X) drehbar sind.

10. System nach einem der Ansprüche 8 oder 9, wobei die mindestens zwei Module (32.1, 32.2) des inneren Elements (32) unabhängig voneinander temperaturgesteuert sind.

11. System nach einem der Ansprüche 8 bis 10, wobei die Abschnitte (34.1, 34.2) der kegelstumpfförmigen Außenseite (34), die jeweils von den mindestens zwei Modulen (32.1, 32.2) des inneren Elements (32) begrenzt werden, in Bezug auf die Achse (X-X) mit jeweiligen Winkeln geneigt sind, die sich voneinander unterscheiden.

12. System nach einem der vorherigen Ansprüche, wobei die kegelstumpfförmige Innenseite (33) der äußeren Hülle (31) und die kegelstumpfförmige Außenseite (34) des inneren Elements (32) von dem stromaufwärtigen Ende (35A) zu dem stromabwärtigen Ende (35B) des Kanals (35) parallel zueinander sind.

13. System nach einem der Ansprüche 1 bis 11, wobei die kegelstumpfförmige Innenseite (33) der äußeren Hülle (31) und die kegelstumpfförmige Außenseite (34) des inneren Elements (32) jeweilige Winkel in Bezug auf die Achse (X-X) aufweisen, die zumindest über einen axialen Abschnitt des Kanals (35) voneinander verschieden sind.

14. System nach einem der vorherigen Ansprüche, wobei die Verteilerkammer (17A) mit einer kegelstumpfförmigen Oberfläche (17B) versehen ist, die auf der Achse (X-X) zentriert ist und stromabwärts divergiert, indem sie einen stromaufwärtigen Abschnitt der Verteilerkammer (17A) mit der kegelstumpfförmigen Innenseite (33) der äußeren Hülle (31) verbindet.

15. System nach einem der vorherigen Ansprüche, wobei ein stromaufwärtiges Ende des stromaufwärtigen Abschnitts (32A) des inneren Elements (32) zumindest teilweise in dem Diffusor (17) angeordnet ist, wobei es zusammen mit dem Diffusor die Verteilerkammer (17A) begrenzt.

## Claims

1. A system for the continuous preparation of an extruded food product (1), comprising:
- a raw material (3) rich in protein and water,
- a sleeve (10) inside which at least one screw (20) is driven so as to apply a thermomechanical treatment to the raw material, and
- a die (30) for extruding a protein and water rich material, the die comprising:
- an outer casing (31), which is tubular, being centred on an axis (X-X), and which has a frustoconical internal face (33), centred on the axis and diverging downstream, this outer casing (31) being fixedly connected to the sleeve (10) so that the material (4) leaving the sleeve is pushed by the screw or screws (20) through the die, and
- an inner member (32), which is coaxial with the outer casing (31) and mounted so as to rotate about the axis (X-X) relative to the outer casing, and which includes both:
- an upstream part (32A), extending at least partially inside the outer casing and having a frustoconical external face (34), centred on the axis and diverging downstream, and
- a downstream part (32B), extending outside the outer casing and coupled to a motor (36) adapted to rotate the inner member about the axis (X-X),
in which the outer casing (31) and/or the upstream part (32A) of the inner member (32) are thermoregulated,
in which the frustoconical internal face (33) of the outer casing (31) and the frustoconical external face (34) of the inner member (32) delimit between them a channel (35) having an upstream end (35A) and a downstream end (35B), which are opposite each other along the axis (X-X) and between which the material (5) flows in the channel so that, when the material is pushed through the die (30), the material progresses in the channel from the upstream end to the downstream end through which the material exits outside the outer casing,
**characterised in that** the sleeve (10) comprises, at its downstream end, an end plate (13) which internally delimits a through bore (15), centred on the axis (X-X) and channelling the material (4) pushed by the screw or screws (20) out of the sleeve, and in which the system further comprises a diffuser (17) which fixedly connects the end plate (13) and the outer casing (31) and which delimits a distribution chamber (17A) connecting the bore (15) of the end plate and the upstream end (35A) of the channel (35), this distribution chamber being shaped so as to distribute the material (4) emerging from the sleeve (10) about the axis (X-X) into the upstream end (35A) of the channel (35).

2. The system according to claim 1, in which the die (30) comprises an adjustment device (37), adapted to adjustably modify the position of the inner member (32) relative to the outer casing (31) along the axis (X-X).

3. The system according to one of claims 1 or 2, in which the outer casing (31) is provided with thermoregulation means (31.3, 31.4) adapted to act on the temperature of the material (5) flowing in the channel (35) by heat exchange with the frustoconical internal face (33) and to apply a temperature profile along the channel between the upstream (35A) and downstream (35B) ends of this channel.

4. The system according to any one of the preceding claims, in which the upstream part (32A) of the inner member (32) is provided with thermoregulation means (32.9, 32.10) adapted to act on the temperature of the material (5) flowing in the channel (35) by heat exchange with the frustoconical external face (34) and to apply a temperature profile along the channel between the upstream (35A) and downstream (35B) ends of this channel.

5. The system according to any one of the preceding claims, in which the outer casing (31) comprises at least two distinct modules (32.1, 32.2) which delimit respective parts (33.1, 33.2) of the frustoconical internal face (33), following one another along the axis (X-X) in a juxtaposed manner.

6. The system according to claim 5, in which the at least two modules (31.1, 31.2) of the outer casing (31) are thermoregulated independently of each other.

7. The system according to one of claims 5 or 6, in which the parts (33.1, 33.2) of the frustoconical internal face (33), respectively delimited by the at least two modules (31.1, 31.2) of the outer casing (31), are inclined with respect to the axis (X-X) at respective angles which are different from one another.

8. The system according to any one of the preceding claims, in which the inner member (32) comprises at least two distinct modules (32.1, 32.2) which delimit respective parts (34.1, 34.2) of the frustoconical external face (34), following one another along the axis (X-X) in a juxtaposed manner.

9. The system according to claim 8, in which the at least two modules (32.1, 32.2) of the inner member (32) are rotatable about the axis (X-X) independently of each other.

10. The system according to one of claims 8 or 9, in which the at least two modules (32.1, 32.2) of the inner member (32) are thermoregulated independently of each other.

11. The system according to any one of claims 8 to 10, in which the parts (34.1, 34.2) of the frustoconical external face (34), respectively delimited by the at least two modules (32.1, 32.2) of the inner member (32), are inclined with respect to the axis (X-X) at respective angles which are different from one another.

12. The system according to any one of the preceding claims, in which the frustoconical internal face (33) of the outer casing (31) and the frustoconical external face (34) of the inner member (32) are parallel to each other from the upstream end (35A) to the downstream end (35B) of the channel (35).

13. The system according to any one of claims 1 to 11, in which the frustoconical internal face (33) of the outer casing (31) and the frustoconical external face (34) of the inner member (32) have respective angulations with respect to the axis (X-X) which are different from one another at least over an axial part of the channel (35).

14. The system according to any one of the preceding claims, in which the distribution chamber (17A) is provided with a frustoconical surface (17B), which is centred on the axis (X-X) and which diverges downstream, connecting an upstream part of the distribution chamber (17A) to the frustoconical internal face (33) of the outer casing (31).

15. The system according to any one of the preceding claims, in which an upstream end of the upstream portion (32A) of the inner member (32) is at least partially arranged in the diffuser (17), delimiting, together with the diffuser, the distribution chamber (17A).
